Europäisches Patentamt

**European Patent Office**

Office européen des brevets

(19)

(11) Veröffentlichungsnummer: **0 129 132**
**B1**

(12) **EUROPÄISCHE PATENTSCHRIFT**

(45) Veröffentlichungstag der Patentschrift:
01.04.87

(51) Int. Cl.⁴: **G 01 K 3/10, G 01 K 1/02**

(21) Anmeldenummer: 84106350.6

(22) Anmeldetag: 04.06.84

(54) **Messeinrichtung zur Erfassung einer Temperaturdifferenz.**

(30) Priorität: 16.06.83 DE 3321862

(43) Veröffentlichungstag der Anmeldung:
27.12.84 Patentblatt 84/52

(45) Bekanntmachung des Hinweises auf die Patenterteilung:
01.04.87 Patentblatt 87/14

(84) Benannte Vertragsstaaten:
AT CH DE IT LI NL

(56) Entgegenhaltungen:
FR - A - 2 305 894
FR - A - 2 377 730
US - A - 4 161 880

(73) Patentinhaber: **Siemens Aktiengesellschaft Berlin und München, Wittelsbacherplatz 2, D-8000 München 2 (DE)**

(72) Erfinder: **Schön, Manfred, Dipl.-Ing., Goethering 25B, D-8504 Stein (DE)**
Erfinder: **Stark, Reinhard, Dipl.-Ing., Wodanstrasse 20, D-8500 Nürnberg (DE)**

**Beschreibung**

1. Die Erfindung betrifft eine Messeinrichtung zur Erfassung einer Temperaturdifferenz mit zwei Temperaturmesswiderständen, die einerseits über einen ersten bzw. zweiten Schalter mit einer Konstantstromquelle und andererseits über einen gemeinsamen Referenzwiderstand mit einem Bezugspotential verbunden sind, wobei jeweils der Verbindungspunkt jedes Temperaturmesswiderstandes mit dem ersten bzw. zweiten Schalter über einen dritten bzw. vierten Schalter und einen Widerstand mit einem ersten Eingang eines als Integrator beschalteten Operationsverstärkers verbunden ist, dessen zweiter Eingang mit dem Referenzwiderstand verbunden ist, wobei ein fünfter Schalter den ersten Eingang des Operationsverstärkers mit über den Widerstand mit dem Bezugspotential verbindet und wobei die Schalter so angesteuert werden, dass die an den Temperaturmesswiderständen anstehenden Spannungen nach dem Dual-Slope-Verfahren in Digitalwerte umgesetzt werden.

Eine derartige Messeinrichtung ist aus der DE-OS 3032091 bekannt. Dabei wird die Differenz zweier mit Temperaturmesswiderständen erfasster Temperaturen mit Hilfe des bekannten Dual-Slope-Verfahrens in einen Digitalwert umgesetzt. Wenn man die Messeinrichtung mit einer Batterie betreibt, so ist auf geringen Stromverbrauch, d. h. kurze Messzeiten, zu achten. In der genannten Offenlegungsschrift wird daher ein Verfahren vorgeschlagen, bei dem bei der Aufwärtsintegration des Dual-Slope-Verfahrens die Differenz nicht von Null bis zum aktuellen Messwert, sondern vom höchsten zu erwartenden Messwert bis zum aktuellen Messwert gebildet wird. Damit werden die Integrationszeiten und somit auch der Stromverbrauch der Schaltung wesentlich kleiner. Zur Realisierung dieses Gedankens wird mit einem Spannungsteiler ein besonderer Bezugspunkt gebildet. Ferner ist ein weiterer Differenzverstärker vorgesehen, über den zwei jeweils in Serie zu den Temperaturmesswiderständen liegende Feldeffekttransistoren angesteuert werden. Dieses bekannte Verfahren zur Verkürzung der Messperiode ist also mit einem hohen Bauteileaufwand verbunden. Der notwendige Spannungsteiler und die zusätzlichen Operationsvrstärker verbrauchen ausserdem wieder zusätzliche Energie. Schliesslich wird der Messfehler – wenn auch nur geringfügig – erhöht. ·

Aufgabe der Erfindung ist es daher, eine Messeinrichtung der eingangs genannten Art so auszugestalten, dass eine Verkürzung der Messperiode mit geringem Bauteileaufwand und ohne Verschlechterung der Messgenauigkeit erreicht wird. Unter Messperiode wird dabei die gesamte Zeitdauer zur Umsetzung der an den Temperaturmesswiderständen anstehenden Spannungen in Digitalwerte verstanden.

Diese Aufgabe wird erfindungsgemäss dadurch gelöst, dass der erste Eingang des Operationsverstärkers über einen Kompensationswiderstand mit dem Bezugspotential verbunden ist, wobei der Kompensationswiderstand so dimensioniert ist, dass bei einer unterhalb eines gewünschten Temperatur-Messbereichs liegenden Messtemperatur des eingeschalteten Temperaturmesswiderstandes (1 oder 2) der Integrationsstrom durch den Integrationskondensator Null ist.

Bei der erfindungsgemässen Lösung wird also davon ausgegangen, dass der Widerstandswert der Temperaturmesswiderstände nicht unter einen bestimmten Grundwert sinkt. Dieser Grundwert wird mit dem Kompensationswiderstand kompensiert, d. h., der Integrationsstrom beträgt in diesem Fall Null. Da bei der Integration damit nicht mehr der gesamte Widerstandswert der Temperaturmesswiderstände zur Geltung kommt, sondern nur noch der den Grundwert übersteigende Anteil, wird die Messperiode wesentlich verkürzt.

Vorteilhafterweise kann dem Widerstand ein in Idealdiodenschaltung geschalteter Impedanzwandler vorgeschaltet sein. Durch den Impedanzwandler wird eine Verfälschung des Messergebnisses durch Innenwiderstände der Schalter verhindert, wobei durch die Idealdiodenschaltung der Integrator während der Integration der Referenzspannung völlig vom Messkreis entkoppelt ist. Dem Kompensationswiderstand kann vorteilhafterweise ein weiterer Widerstand in Reihe geschaltet sein, dem ein steuerbarer Schalter parallelgeschaltet ist, wobei der steuerbare Schalter während der bem Dual-Slope-Verfahren vorgesehenen konstanten Integrationszeiten geschlossen wird. Durch die Verkleinerung des für den Integrator wirksamen Widerstandes während der konstanten Integrationszeiten können diese verkürzt werden, ohne dass auch die Messzeitdiffrenzen bei vorgegebener Temperaturdifferenz kleiner werden. Letztere dürfen zur Erzielung einer ausreichenden Auflösung nämlich nicht zu klein werden. Damit wird nochmals eine Verkürzung der gesamten Messperiode erreicht.

In einer vorteilhaften Ausführung kann ein Vergleichswiderstand vorgesehen sein, der einerseits über einen Schalter (18) an die Konstantstromquelle und andererseits an den Referenzwiderstand angeschlossen ist, wobei ein Schalter (19) den Verbindungspunkt von Schalter (18) und Vergleichswiderstand mit dem Verbindungspunkt der Schalter (6, 7) verbindet, wobei die Schalter (18, 19) so angesteuert werden, dass die am Vergleichswiderstand abfallende Spannung ebenfalls nach dem Dual-Slope-Verfahren in einen Digitalwert umgesetzt wird und wobei die Ermittlung der mit den Temperaturmesswiderständen erfassten Messtemperaturen durch Differenzbildung der entsprechenden Digitalwerte mit dem dem Vergleichswiderstand zugeordneten Digitalwert erfolgt. Damit wird auch die Ermittlung der absoluten Messtemperaturen, die bei manchen Anwendungen zusätzlich zur Temperaturdifferenz benötigt werden, auf einen Differenzbildung zurückgeführt. Die erfindungsgemässe Anordnung hätte ansonsten den Nachteil, dass durch den Kompensationswiderstand bei der Bestimmung von absoluten Messtemperaturen Fehler auftreten, die jedoch bei der Differenzbildung wieder wegfallen.

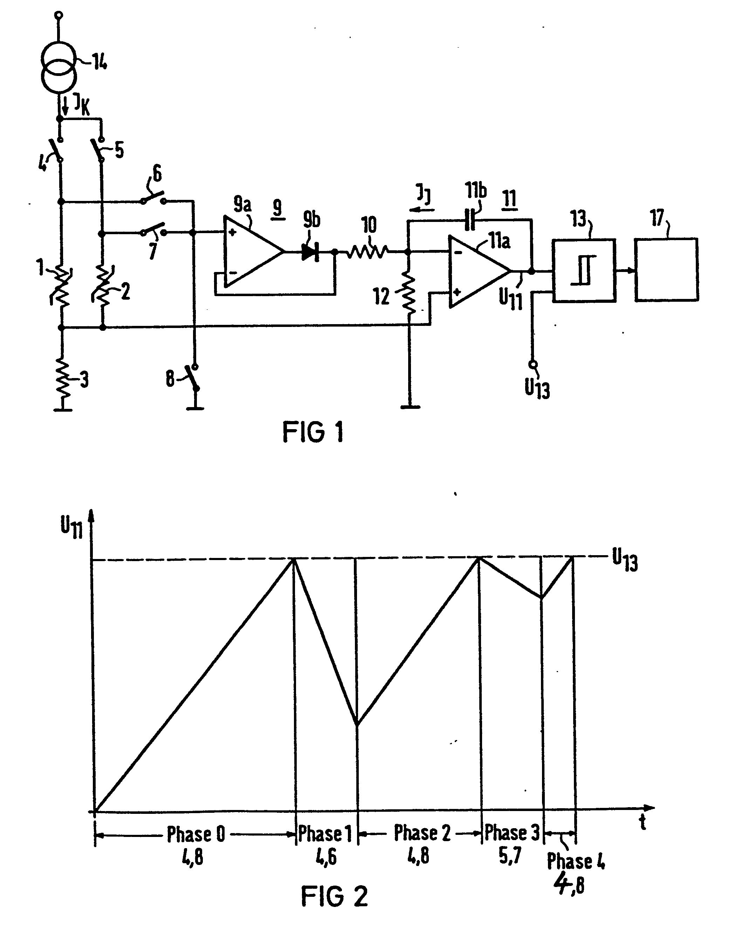

Ausführungsbeispiele der Erfindung werden nachfolgend anhand der Fig. 1 bis 4 näher erläutert.

Beim Ausführungsbeispiel nach Fig. 1 sind zwei Temperaturmesswiderstände 1 und 2 vorgesehen, die jeweils Messstellen zugeordnet sind, deren Temperaturdifferenz erfasst werden soll. Die Temperaturmesswiderstände 1 und 2 sind einerseits über je einen Schalter 4 bzw. 5 mit einer Konstantstromquelle 14 und andererseits über einen gemeinsamen Referenzwiderstand 3 mit dem Bezugspotential der Schaltung verbunden. Jeweils der Verbindungspunkt von Temperaturmesswiderstand 1 und Schalter 4 bzw. Temperaturmesswiderstand 2 und Schalter 5 ist über je einen Schalter 6 bzw. 7 mit dem nichtinvertierenden Eingang eines Operationsverstärkers 9a verbunden. Der nichtinvertierende Eingang des Operationsverstärkers 9a ist ferner über einen weiteren Schalter 8 mit dem Bezugspotential verbunden. Der Ausgang des Operationsverstärkers 9a ist über eine Diode 9b auf seinen invertierenden Eingang zurückgekoppelt. Mit dem Operationsverstärker 9a und der Diode 9b wird also ein Impedanzwandler gebildet, der ausserdem als Idealdiodenschaltung, d.h. schwellwertlose Diodenschaltung, wirkt.

Die Diode 9b ist über einen Widerstand 10 mit dem invertierernden Eingang eines Operationsverstärkers 11a verbunden. Der Ausgang des Operationsverstärkers 11a ist über einen Kondensator 11b auf seinen invertierenden Eingang zurückgekoppelt. Der Operationsverstärker 11a mit dem Kondensator 11b wirkt daher als Integrator. Der invertierende Eingang des Operationsverstärkers 11a ist über einen Kompensationswiderstand 12 mit dem Bezugspotential und der nichtinvertierende Eingang mit dem Verbindungspunkt von Temperaturmesswiderständen 1, 2 und Referenzwiderstand 3 verbunden. Dem Integrator 11 ist ein Komparator 13 nachgeschaltet, der eine Auswerteschaltung 17 steuert.

Die Schalter 4 bis 8 werden durch eine der Übersichtlichkeit wegen nicht dargestellte Steuerschaltung so angesteuert, dass mit der Anordnung eine Analog-Digital-Umsetzung der an den Temperaturmesswiderständen 1, 2 anstehenden Spannungen nach dem beispielsweise aus Tietze-Schenk «Halbleiterschaltungstechnik», Seiten 536, 537, bekannten Doppelintegrationsverfahren, auch Dual-Slope-Verfahren genannt, erfolgt.

Der Steuerablauf für eine Messperiode wird nachfolgend anhand der Fig. 2 näher erläutert. Diese Figur zeigt den Verlauf der Ausgangsspannung $U_{11}$ des Integrators 11 in den einzelnen Schaltphasen einer Messperiode. In Zusammenhang mit den jeweiligen Schaltphasen sind die Bezugszeichen der jeweils geschlossenen Schalter aufgetragen.

Die Phase Null dient lediglich dazu, die Ausgangsspannung des Integrators 11 auf einen definierten Ausgangswert zu bringen. Dazu werden die Schalter 4 und 8 geschlossen, so dass der Integrator 11 bis zum Erreichen der Schwellwertspannung $U_{13}$ des Komparators 13 hochintegriert.

Dann wird in einer Phase 1, die eine konstante, von einem Oszillator abgeleitete Zeitdauer hat, der Schalter 8 geöffnet und der Schalter 6 geschlossen, wobei der Schalter 4 geschlossen bleibt. Damit integriert der Integrator 11 für eine feste Zeitspanne die Messspannung am Temperaturmesswiderstand 1, wobei der Integrationsstrom $J_J$ über den Kondensator 11b durch den Widerstand 12 herabgesetzt wird. Nach Ende der konstanten Zeitspanne wird in einer Phase 2 der Schalter 6 geöffnet und der Schalter 8 geschlossen, während der Schalter 4 geschlossen bleibt. Damit wird nun die am Referenzwiderstand 3 abfallende Spannung integriert, wobei der invertierende Eingang des Operationsverstärkers 11a über den Widerstand 12 mit dem Bezugspotential verbunden ist. Durch die Diode 9b ist der Impedanzwandler 9 mit dem vorgeschalteten Schaltungsteil vom Integrator 11 abgekoppelt. Die Zeitspanne, bis der Integrator 11 die dem Komparator 13 vorgegebene Vergleichsspannung $U_{13}$ erreicht, wird erfasst, indem die in dieser Zeitspanne von einem Oszillator abgegebenen Impulse von einem Zähler gezählt werden. Der Zählerstand steht mit dem Widerstandswert des Temperaturmesswiderstands 1 und damit mit der ersten Messtemperatur in linearem Zusammenhang.

In einer Phase 3 werden die Schalter 5 und 7 geschlossen, und es wird während einer konstanten Zeitspanne die am Temperaturmesswiderstand 2 anstehende Spannung integriert, wobei der Integrationsstrom $J_J$ wieder durch den Widerstand 12 reduziert wird. Nach Ende dieser Zeitspanne wird der Schalter 7 geöffnet und der Schalter 8 geschlossen, während der Schalter 5 geschlossen bleibt. Damit wird während einer Phase 4 wieder die am Referenzwiderstand 3 abfallende Spannung integriert. Die Zeitspanne, bis die Ausgangsspannung $U_{11}$ des Integrators 11 den Vergleichswert $U_{13}$ erreicht, wird wieder durch Zählen der während dieser Zeitspanne von einem Komparator abgegebenen Impulse erfasst, so dass ein digitaler Wert vorliegt, der mit der zweiten Messtemperatur in linearem Zusammenhang steht. Durch Differenzbildung der beiden so erhaltenen Zählerstände erhält man einen digitalen Wert, der der Differenztemperatur der beiden Messstellen proportional ist.

Die Temperaturdifferenz T ergibt sich dann zu:

$$T \approx n_o \frac{R_1 \pm R_F}{R_3 \pm R_F} - n_o \frac{R_2 \pm R_F}{R_3 \pm R_F} \text{, wobei}$$

$n_o$ = konstante Impulszahl,

$R_{1(2, 3)}$ = Widerstandswerte der Widerstände 1 (2, 3)

$$R_F = \frac{U_{offset}}{J_K}$$

$U_{offset}$ = Offsetspannung des Operationsverstärkers 11a

$J_K$ = Konstantstrom.

Im Zähler fällt $R_F$ heraus, wenn sich die Offset-Spannung zwischen den aufeinanderfolgenden

Phasen innerhalb einer Messperiode nicht ändert. Langzeitänderung und Temperaturdrift sind ohne Einfluss. Der im Nenner verbleibende «Fehlerwiderstand» $R_F$ ergibt einen vom Messwert abhängigen Fehler. Bei $J_K \cdot R_3 = 0,5$ V und $U_{Offset} = 0,5$ mV ist dieser Fehler 0,1%. Wesentlich ist, dass die Offset-Spannungsänderung und genauso eine Änderung des Verstärkungseingangsstroms ohne Einfluss auf die Messgenauigkeit bis herab zur Temperaturdifferenz Null sind.

Die Innenwiderstände der Schalter 4 und 5 sind ohne Einfluss auf die Messgenauigkeit, da der Strom eingeprägt wird. Innenwiderstandsänderungen der Schalter 6 und 7 könnten jedoch ohne Impedanzwandler 9 zu Fehlern führen, da sie in die Integrationszeitkonstante eingehen. Der den Operationsverstärker 11a vorgeschaltete Impedanzwandler 9 ist jedoch eingangsseitig so hochohmig, dass grosse Widerstandsänderungen der Schalter 6 und 7 zugelassen werden können. Die Sperrströme der Schalter 4 bis 8 können vernachlässigt werden, da immer einer der Schalter 6, 7 oder 8 geschlossen ist und die Widerstände 1 bis 3 sehr niederohmig sind.

Im folgenden wird nun die Funktion des Kompensationswiderstands 12 erläutert.

Ohne diesen Kompensationswiderstand 12 würde als Integrationsspannung für den Integrator 11 stets die volle am Temperaturmesswiderstand 1 bzw. 2 anstehende Spannung wirken. Das führt dazu, dass sich die Messzeiten, d.h. die Dauer der Phasen 2 und 4, bei einer Temperaturänderung von z.B. 20 °C auf 90 °C — entsprechend einer Widerstandsänderung von z.B. 540 Ohm auf 770 Ohm — nur etwa um 25% ändern. Anzustreben ist aber, dass die Messzeit an der unteren Grenze des Temperaturmessbereichs Null wird, indem man den Widerstandswert der Temperaturmesswiderstände an der unteren Messbereichsgrenze, z.B. bei 0 °C mit dem Widerstand 12 kompensiert.

Die Widerstände 10, 12 sind dabei so dimensioniert, dass während der Phasen 1 und 3 der Integrationsstrom bei einer Messtemperatur von z.B. 0 °C Null ist. dies wird erreicht, wenn gilt: $R_1/R_3 = R_{10}/R_{12}$. Bei der obengenannten Temperaturänderung von 20 °C auf 90 °C ändert sich die Messzeit nicht mehr von z.B. 100 auf 125 ms, sondern von 5 auf 30 ms. Damit wird die Dauer der gesamten Messperiode entsprechend verkürzt, so dass auch der Stromverbrauch der Anordnung geringer wird. Dies ist wichtig, wenn die Messanordnung mit einer Batterie betrieben wird.

Während der Phasen 2 und 4, in denen der Schalter 8 geschlossen ist, liegt der invertierende Eingang des Operationsverstärkers 11a über den Widerstand 12 an Bezugspotential, während durch die Diode 9b der Impedanzwandler mit dem vorgeschalteten Schaltungsteil völlig vom Operationsverstärker 11a entkoppelt ist.

Mit der beschriebenen Kompensation kann also die Messzeit, d.h. die Dauer der Phasen 2 und 4, verkürzt werden, wobei jedoch die Messzeitänderung bei vorgegebener Temperaturänderung und damit die Auflösung gleich bleibt. Aus Stromersparnisgründen möchte man auch die konstanten Zeiten der Phasen 1 und 3 so kurz wie möglich halten. Würde man diese konstanten Zeiten ohne weitere Massnahmen verkürzen, so würde man entsprechend auch die Messzeitdifferenzen und damit die Auflösung verkleinern.

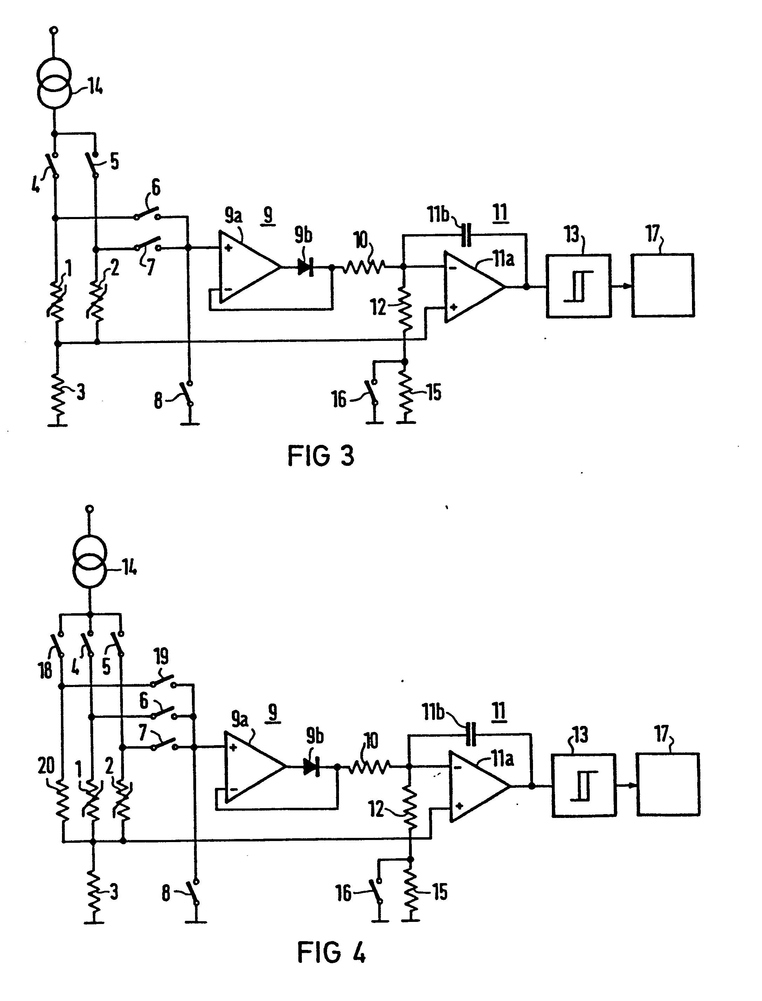

Dieses Problem kann dadurch gelöst werden, dass man entsprechend einer Anordnung nach Fig. 3 eine Reihe zu dem Kompensationswiderstand 12 einen weiteren Widerstand 15 schaltet, der mit einem Schalter 16 überbrückbar ist. Der Schalter 16 wird während der Phasen 1 und 3 geschlossen, so dass nur der Kompensationswiderstand 12 für die Grundwiderstandskompensation wirksam wird. Während der Messzeiten, d.h. während der Phasen 2 und 4, ist der Schalter 16 geöffnet, so dass die Reihenschaltung der Widerstände 12 und 15 wirksam wird. Der dadurch bedingte geringere Ladestrom für den Kondensator 11b des Integrators 11 bewirkt bei gleichlangen Phasen 1 und 3 eine Verlängerung der Messzeiten, d.h. der Phasen 2 und 4. Bei gleichbleibender Auflösung können daher die Phasen 1 und 3 entsprechend verkürzt werden.

Durch die zur Verkürzung einer Messperiode erforderlichen zusätzlichen Elemente, z.B. durch den Innenwiderstand des Schalters 16, entsteht ein Messfehler bei der Umwandlung jeder einzelnen Messtemperatur. Bei der Differenzbildung der Messtemperaturen fällt jedoch der Fehler weg, sofern sich die Störgrössen während einer relativ kurzen Messperiode nicht ändern.

Der genannte Messfehler würde jedoch voll in das Messergebnis eingehen, wenn man die einzelnen Messtemperaturen bestimmen will. Dieses Problem kann gelöst werden, wenn man die Ermittlung der einzelnen Messtemperaturen wieder auf eine Differenzbildung zurückführt. Bei einem Ausführungsbeispiel nach Fig. 4 ist dabei ein weiterer Messzweig mit einem konstanten Vergleichswiderstand 17 vorsehen, der einerseits über einen Schalter 18 an die Konstantstromquelle 14 und andererseits an den Referenzwiderstand 3 angeschlossen ist. Der Verbindungspunkt von Schalter 18 und Vergleichswiderstand 17 ist über einen Schalter 19 mit dem Eingang des Impedanzwandlers 9 verbunden. Ansonsten entspricht die Schaltung vom Ausführungsbeispiel nach Fig. 3. Nach dem bereits besprochenen Verfahren wird auch die am Vergleichswiderstand 17 anstehende Spannung in einen Digitalwert umgewandelt. Die mit jedem Temperaturmesswiderstand 1 und 2 erfasste Messtemperatur kann damit einzeln durch Differenzbildung mit dem so gewonnenen konstanten Wert ermittelt werden. Durch die Differenzbildung können die Absoluttemperaturen der Messwiderstände 1 und 2 ebenso genau ermittelt werden, wie deren Differenztemperatur.

Mit den dargestellten Schaltungsmassnahmen gelingt es also, die Dauer einer Messperiode deutlich zu verringern, und zwar sowohl die konstanten Zeiten der Phasen 1 und 3 als auch die Messzeiten der Phasen 2 und 4. Dazu sind nur sehr wenige und ausserdem billige Bauelemente erforderlich.

**Patentansprüche**

1. Messeinrichtung zur Erfassung einer Temperaturdifferenz mit zwei Temperaturmesswiderständen (1, 2), die einerseits über je einen ersten bzw. zweiten Schalter (4, 5) mit einer Konstantstromquelle (14) und andererseits über einen gemeinsamen Referenzwiderstand (3) mit einem Bezugspotential verbunden sind, wobei jeweils der Verbindungspunkt jedes Temperaturmesswiderstands (1, 2) mit dem ersten bzw. zweiten Schalter (4, 5) über einen dritten bzw. vierten Schalter (6, 7) und einen Widerstand (10) mit einem ersten Eingang eines mit einem Integrationskondensator (11b) als Integrator beschalteten Operationsverstärkers (11a) verbunden ist, dessen zweiter Eingang mit dem Referenzwiderstand (3) verbunden ist, wobei ein fünfter Schalter (8) den ersten Eingang des Operationsverstärkers (11a) über den Widerstand (10) mit dem Bezugspotential verbindet, wobei dem Operationsverstärker (11a) eine Auswerteschaltung (17) nachgeschaltet ist und wobei die Schalter (4 bis 8) so angesteuert werden, dass die an den Temperaturmesswiderständen (1, 2) anstehenden Spannungen nach dem Dual-Slope-Verfahren in Digitalwerte umgesetzt werden, dadurch gekennzeichnet, dass der erste Eingang des Operationsverstärkers (11a) über einen Kompensationswiderstand (12) mit dem Bezugspotential verbunden ist, wobei der Kompensationswiderstand (12) so dimensioniert ist, dass bei einer unterhalb eines gewünschten Temperaturmessbereichs liegenden Messtemperatur des eingeschalteten Temperaturmesswiderstandes (1 oder 2) der Integrationsstrom ($J_J$) durch den Integrationskondensator (11b) Null ist.

2. Messeinrichtung nach Anspruch 1, dadurch gekennzeichnet, dass dem Widerstand (10) ein in Idealdiodenschaltung beschalteter Impedanzwandler (9) vorgeschaltet ist.

3. Messeinrichtung nach Anspruch 1 oder 2, dadurch gekennzeichnet, dass dem Kompensationswiderstand (12) ein weiterer Widerstand (15) in Reihe geschaltet ist, dem ein steuerbarer Schalter (16) parallelgeschaltet ist, der während der beim Dual-Slope-Verfahren vorgesehenen konstanten Integrationszeiten geschlossen wird.

4. Messeinrichtung nach einem der Ansprüche 1 bis 3, dadurch gekennzeichnet, dass ein temperaturunabhängiger Vergleichswiderstand (20) vorgesehen ist, der einerseits über einen Schalter (18) an die Konstantstromquelle (14) und andererseits an den Referenzwiderstand (3) angeschlossen ist, dass ein Schalter (19) den Verbindungspunkt von Schalter (18) und Vergleichswiderstand (20) mit dem Verbindungspunkt der Schalter (6 und 7) verbindet, dass die Schalter (18 und 19) so angesteuert werden, dass die am Vergleichswiderstand (20) abfallende Spannung ebenfalls nach dem Dual-Slope-Verfahren in einen Digitalwert umgesetzt wird und dass die Ermittlung der mit den Temperaturmesswiderständen (1 und 2) erfassten Messtemperaturen durch Differenzbildung der entsprechenden Digitalwerte mit dem dem Vergleichswiderstand zugeordneten Digitalwert erfolgt.

**Claims**

1. A measuring device for detecting a temperature difference, comprising two temperature-measuring resistors (1, 2) which are each respectively connected via a first or second switch (4, 5) as the case may be, to a constant current source (14) and are connected via a common reference resistor (3) to a reference potential, where the connection point of each temperature-measuring resistor (1, 2) to the first or second switch (4, 5), as the case may be, is connected via a respective third and fourth switch (6, 7) and via a resistor (10) to a first input of an operational amplifier (11a), connected to an integration capacitor (11b) as integrator, and with a second input connected to the reference resistor (3), where a fifth switch (8) connects the first input of the operational amplifier (11a) via the resistor (10) to the reference potential, where the operational amplifier (11a) is connected at its output to an analysis circuit (17), and where the switches (4 to 8) are driven in such manner that the voltage which occur across the temperature-measuring resistors (1, 2) are converted in accordance with the dual-slope process into digital values, characterised in that the first input of the operational amplifier (11a) is connected to the reference potential via a compensation resistor (12), where the compensation resistor (12) is dimensioned such that where the measuring temperature of the connected temperature-measuring resistor (1 or 2) is below a desired temperature measurement range, the integration current ($J_J$) through the integration capacitor (11b) is zero.

2. A measuring device as claimed in claim 1, characterised in that the resistor (10) is connected in series with an impedance converter (9) connected in an ideal diode circuit.

3. A measuring device as claimed in claim 1 or 2, characterised in that the compensation resistor (12) is connected in series with a further resistor (15) connected in parallel with a controllable switch (16) which is closed during the constant integration times provided in the dual-slope process.

4. A measuring device as claimed in one of claims 1 to 3, characterised in that a temperature-independent comparator resistor (20) is connected at one end to the reference resistor (3), and is connected via a switch (18) to the constant current source (14), that a switch (19) connects the connection point of switch (18) and comparator resistor (20) to the connection point of the switches (6 and 7), that the switches (18 and 19) are driven in such manner that the voltage drop across the comparator resistor (20) is likewise converted into a digital value in accordance with the dual-slope process, and that the measurement temperatures detected by the temperature-measuring resistors (1 and 2) are determined by forming the difference between the corresponding digital values and the digital value assigned to the comparator resistor.

## Revendications

1. Dispositif de mesure servant à détecter une différence de température, comportant deux résistances de mesure de température (1, 2) qui sont raccordées d'une part par l'intermédiaire respectivement d'un premier et d'un second commutateurs (4, 5) à une source de courant constant (14) et d'autre part par l'intermédiaire d'une résistance de référence commune (3) à un potentiel de référence, auquel cas respectivement le point de liaison de chaque résistance de mesure de température (1, 2) avec le premier et le second commutateur (4, 5) est relié par l'intermédiaire d'un troisième ou d'un quatrième commutateur (6, 7) et d'une résistance (10) à une première entrée d'un amplificateur opérationnel (11a) raccordé à un condensateur d'intégration (11b) utilisé en tant qu'intégrateur et dont la seconde entrée est reliée à la résistance de référence (3), et dans lequel un cinquième commutateur (8) relie la première entrée de l'amplificateur opérationnel (11a) par l'intermédiaire de la résistance (10) au potentiel de référence, un circuit d'évaluation (17) est branché en aval de l'amplificateur opérationnel (11a), et les commutateurs (4 à 8) sont commandés de telle sorte que les tensions appliquées aux résistances de mesure de température (1, 2) sont converties en valeurs numériques selon le procédé Dual-slope, caractérisé par le fait que la première entrée de l'amplificateur opérationnel (11a) est reliée par l'intermédiaire d'une résistance de compensation (12) au potentiel de référence, auquel cas la résistance de compensation (12) est dimensionnée de telle sorte que, pour une température de mesure de la résistance de mesure de température branchée (1 ou 2), inférieure à une plage désirée de mesure de température, le courant d'intégration ($J_J$) traversant le condensateur d'intégration (11b) est nul.

2. Dispositif de mesure suivant la revendication 1, caractérisé par le fait qu'un transformateur d'impédence (9) câblé sous la forme d'un circuit à diode idéal (9) est branché en amont de la résistance (10).

3. Dispositif de mesure suivant la revendication 1 ou 2, caractérisé par le fait qu'en série avec la résistance de compensation (12) se trouve branchée une autre résistance (15), en parallèle avec laquelle est branché un commutateur commandable (16), qui est fermé pendant les temps d'intégration constants prévus conformément au procédé Dual-Slope.

4. Dispositif de mesure suivant l'une des revendications 1 à 3, caractérisé par le fait qu'il est prévu une résistance de comparaison (20), qui est indépendant de la température et qui est raccordée d'une part par l'intermédiaire d'un commutateur (18) à la source de courant constant (14) et d'autre part à la résistance de référence (3), qu'un commutateur (19) relie le point de jonction du commutateur (18) et de la résistance de comparaison (20) au point de jonction des commutateurs (6 et 7), que les commutateurs (18 et 19) sont commandés de telle sorte que la tension chutant aux bornes de la résistance de comparaison (20) est également convertie en une valeur numérique selon le procédé Dual-Slope et que la détermination des temperatures pératures détectée par les résistances de mesure de température (1 et 2) est réalisée par formation de la différence des valeurs numériques correspondantes avec la valeur numérique associée à la résistance de comparaison.

FIG 1

FIG 2

0129132

FIG 3

FIG 4

9